# FASCICULE DE BREVET EUROPEEN

(11) **EP 2 820 821 B1**
(45) Date de publication et mention de la délivrance du brevet: **20.04.2016**
(21) Numéro de dépôt: 13710462.6
(22) Date de dépôt: 15.02.2013
(51) Int. Cl.: H04L 29/06, H04L 29/08, H04M 7/00, H04M 3/42

(54) **PROCEDE ET DISPOSITIF DE MISE A DISPOSITION D'AU MOINS UNE DONNEE DE COMMUNICATION**
VERFAHREN UND VORRICHTUNG ZUR BEREITSTELLUNG MINDESTENS EINES KOMMUNIKATIONSDATUMS
METHOD AND DEVICE FOR MAKING AVAILABLE AT LEAST ONE COMMUNICATION DATUM

(30) Priorité: 28.02.2012 FR 1251788
(43) Date de publication de la demande: 07.01.2015
(73) Titulaire: Orange, 75015 Paris (FR)
(72) Inventeur: MONCOMBLE, Ghislain, 22310 Plestin les Grèves (FR)
(86) Numéro de dépôt international: PCT/FR2013/050313
(87) Numéro de publication internationale: WO 2013/128094

(56) Documents cités:
- WO-A1-2008/070605
- GB-A- 2 440 682
- NATARAJAN P ET AL: "Videotext OCR using hidden markov models", DOCUMENT ANALYSIS AND RECOGNITION, 2001. PROCEEDINGS. SIXTH INTERNATIO NAL CONFERENCE ON SEATTLE, WA, USA 10-13 SEPT. 2001, LOS AALMITOS, CA, USA,IEEE COMPUT. SOC, US, 10 septembre 2001 (2001-09-10), pages 947-951, XP010560642, DOI: 10.1109/ICDAR.2001.953925 ISBN: 978-0-7695-1263-1

## Description

### Domaine de l'invention

L'invention se situe dans le domaine des réseaux de télécommunication. Elle concerne un dispositif et un procédé de mise à disposition d'au moins une donnée de communication par un premier terminal à destination d'au moins un deuxième terminal et permettant l'établissement d'une communication multimédia entre le deuxième terminal et un terminal distant.

### Art antérieur

Un service de type « Click to Call » (cliquer pour appeler), autrement appelé appel immédiat, est une application largement répandue dans le domaine des applications de l'Internet. A partir de la consultation d'une page Internet affichant des coordonnées téléphoniques, un utilisateur peut en cliquant sur les coordonnées téléphoniques affichées, déclencher l'établissement d'un appel téléphonique vers l'utilisateur joignable par les coordonnées téléphoniques affichées, à partir par exemple d'un terminal téléphonique VolP (Voice over Internet Protocol), connecté à son terminal de consultation. L'appel peut également être émis à partir d'un terminal mobile par exemple dont le numéro aura été préalablement renseigné dans l'application « Click to Call ».

### Inconvénient de l'art antérieur

Afin d'établir l'appel à partir de n'importe quel terminal, la technologie de l'art antérieur nécessite l'enregistrement préalable par un utilisateur des coordonnées du terminal à partir duquel l'utilisateur souhaite émettre l'appel. L'utilisation de l'application « Click to Call » sur un ordinateur de type PC (Personal Computer) partagé entre plusieurs utilisateurs, par exemple dans un cybercafé, ou un domicile familial, devient compliquée. En effet, chaque utilisateur possède en général son propre terminal et souhaite émettre l'appel à partir de celui-ci. Chaque utilisateur doit alors renseigner systématiquement ses coordonnées téléphoniques sur l'application du terminal partagé. Ce qui résulte en une perte de temps pour l'utilisateur et un mécanisme peu sécurisé de la divulgation de ses coordonnées personnelles.

D'autres problèmes similaires apparaissent lors de la restitution d'une émission télévisée dans laquelle un utilisateur est incité à émettre un appel ou envoyer un SMS (Short Message Service) pour jouer, commander des produits, ou obtenir plus d'informations sur l'émission restituée. Il n'existe pas de technique simple et automatique permettant à l'utilisateur d'établir une communication à partir de n'importe quel terminal téléphonique dont il dispose. L'utilisateur doit mémoriser les coordonnées restituées lors de l'émission télévisée, les composer sur son terminal et déclencher l'appel. L'utilisateur peut ainsi perdre du temps en mémorisant et composant le numéro à joindre. De plus, ce mécanisme peut conduire à établir des communications non désirées en cas d'erreur de l'utilisateur sur les coordonnées mémorisées.

L'art antérieur est par example représenté dans le document WO 2008/070605 A1.

### Exposé de l'invention

Un des buts de l'invention est d'apporter des améliorations par rapport à l'état de la technique. Elle propose à cet effet un procédé de mise à disposition selon la revendication 1. Corrélativement, l'invention concerne un terminal de mise à disposition selon la revendication 9.

Le procédé de mise à disposition d'une donnée de communication permet à un utilisateur d'obtenir la donnée de communication, par exemple sur son terminal mobile sans avoir à entrer manuellement la donnée de communication sur son terminal. Une simple interaction avec le premier terminal lui permet d'obtenir la donnée de communication sur le second terminal. Le premier terminal peut être un terminal de type ordinateur personnel ou une télévision ou un terminal de restitution de flux multimédia quelconque.

Le procédé selon l'invention permet de simplifier l'accès et l'utilisation de données de communication restituées sur différents terminaux.

Les différents modes ou caractéristiques de réalisation mentionnés ci-après peuvent être ajoutés indépendamment ou en combinaison les uns avec les autres, aux étapes du procédé de mise à disposition défini ci-dessus.

Les différents modes ou caractéristiques de réalisation mentionnés ci-après peuvent être ajoutés indépendamment ou en combinaison les uns avec les autres, aux caractéristiques du dispositif de mise à disposition défini ci-dessus.

Selon un mode particulier de réalisation de l'invention, le procédé de mise à disposition comprend en outre une étape de conversion de la au moins une donnée de communication reçue sous la forme d'un lien interprétable par l'application du second terminal.

La donnée de communication peut être ainsi être interprétée par une application du second terminal de l'utilisateur sans nécessité l'intervention de l'utilisateur ou de complexes manipulations. Selon un autre mode particulier de réalisation de l'invention, l'identifiant du au moins un second terminal est extrait de la demande d'obtention de la au moins une donnée de communication. L'utilisateur n'a pas besoin d'entrer l'identifiant du second terminal sur le terminal de restitution de la donnée de communication. Il obtient la donnée de communication de manière sécurisée.

Selon un autre mode particulier de réalisation de l'invention, l'étape d'extraction de la au moins une donnée de communication comprend une sous-étape d'analyse des données audio et/ou vidéo du flux multimédia consulté. Ce mode particulier de réalisation de l'invention permet d'extraire une donnée de communication même lorsque cette donnée n'a pas été préalablement associée au flux multimédia consulté sur le premier terminal. Il permet d'appliquer l'invention à n'importe quel type de flux multimédia reçu par le premier terminal.

L'invention concerne aussi un procédé de réception selon la revendication 5. Corrélativement, l'invention concerne aussi un terminal de réception selon la revendication 10.

L'utilisateur du terminal de réception peut ainsi déclencher d'un simple clic sur le terminal de réception, une communication multimédia à partir d'une donnée de communication qui lui a été restituée sur un autre terminal. A la différence des techniques de l'art antérieur, c'est le terminal de réception qui déclenche la communication souhaitée par l'utilisateur. L'utilisateur a ainsi la possibilité de déclencher immédiatement la communication ou de la déclencher ultérieurement. Les différents modes ou caractéristiques de réalisation mentionnés ci-après peuvent être ajoutés indépendamment ou en combinaison les uns avec les autres, aux étapes du procédé de réception défini ci-dessus.

Les différents modes ou caractéristiques de réalisation mentionnés ci-après peuvent être ajoutés indépendamment ou en combinaison les uns avec les autres, aux caractéristiques du dispositif de réception défini ci-dessus.

Selon un mode particulier de réalisation de l'invention, le procédé de réception comprend, préalablement à l'étape de mise en oeuvre de l'application, une étape de conversion de la au moins une donnée de communication reçue, sous la forme d'un lien interprétable par l'application du second terminal. Ainsi, lorsque le premier terminal ne peut effectuer la conversion, le second terminal effectue lui-même la conversion de la donnée de communication de sorte que le déclenchement de la communication reste simple pour l'utilisateur.

Selon un autre mode particulier de réalisation de l'invention, la au moins une donnée de communication est associée à des informations complémentaires permettant à l'utilisateur d'identifier la au moins une donnée de communication.

Ce mode particulier de réalisation de l'invention est particulièrement avantageux dans le cas où le second terminal reçoit plusieurs données de communication, ou si l'utilisateur souhaite enregistrer la donnée de communication et pouvoir l'identifier ultérieurement.

Selon un autre mode particulier de réalisation de l'invention, le procédé de réception comprend une étape préalable d'envoi d'une demande d'obtention de la au moins une donnée de communication au premier terminal. Corrélativement, le terminal de réception comprend des moyens d'envoi d'une demande d'obtention de la au moins une donnée de communication au terminal de restitution.

Par exemple, le terminal de réception est ainsi capable d'interagir avec le premier terminal et d'obtenir des informations sans nécessité d'associer préalablement le terminal de réception et le premier terminal.

L'invention concerne aussi un programme d'ordinateur comportant des instructions pour l'exécution du procédé de mise à disposition selon l'un quelconque des modes particuliers de réalisation de l'invention cités plus haut, lorsque le programme est exécuté par un processeur.

L'invention concerne aussi un programme d'ordinateur comportant des instructions pour l'exécution du procédé de réception selon l'un quelconque des modes particuliers de réalisation de l'invention cités plus haut, lorsque le programme est exécuté par un processeur.

L'invention concerne aussi un support d'enregistrement lisible par un processeur sur lequel est enregistré un programme comportant des instructions pour l'exécution du procédé de mise à disposition selon l'un quelconque des modes particuliers de réalisation de l'invention cités plus haut.

L'invention concerne aussi un support d'enregistrement lisible par un processeur sur lequel est enregistré un programme comportant des instructions pour l'exécution du procédé de réception selon l'un quelconque des modes particuliers de réalisation de l'invention cités plus haut.

### Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels:
- la figure 1 montre un environnement de mise en oeuvre du procédé de mise à disposition et du procédé de réception d'une donnée de communication selon des modes particuliers de réalisation de l'invention,
- la figure 2 illustre des étapes du procédé de mise à disposition d'au moins une donnée de communication selon un mode particulier de réalisation de l'invention,
- la figure 3 illustre des étapes du procédé de réception d'au moins une donnée de communication selon un mode particulier de réalisation de l'invention,
- la figure 4 illustre des étapes du procédé de mise à disposition d'au moins une donnée de communication selon un autre mode particulier de réalisation de l'invention,
- la figure 5 illustre des étapes du procédé de réception d'au moins une donnée de communication selon un autre mode particulier de réalisation de l'invention,
- la figure 6 illustre un dispositif permettant de mettre en oeuvre le procédé de mise à disposition d'au moins une donnée de communication selon un mode particulier de réalisation de l'invention,
- la figure 7 illustre un dispositif permettant de mettre en oeuvre le procédé de réception d'au moins une donnée de communication selon un mode particulier de réalisation de l'invention.

### Description d'un mode particulier de réalisation de l'invention

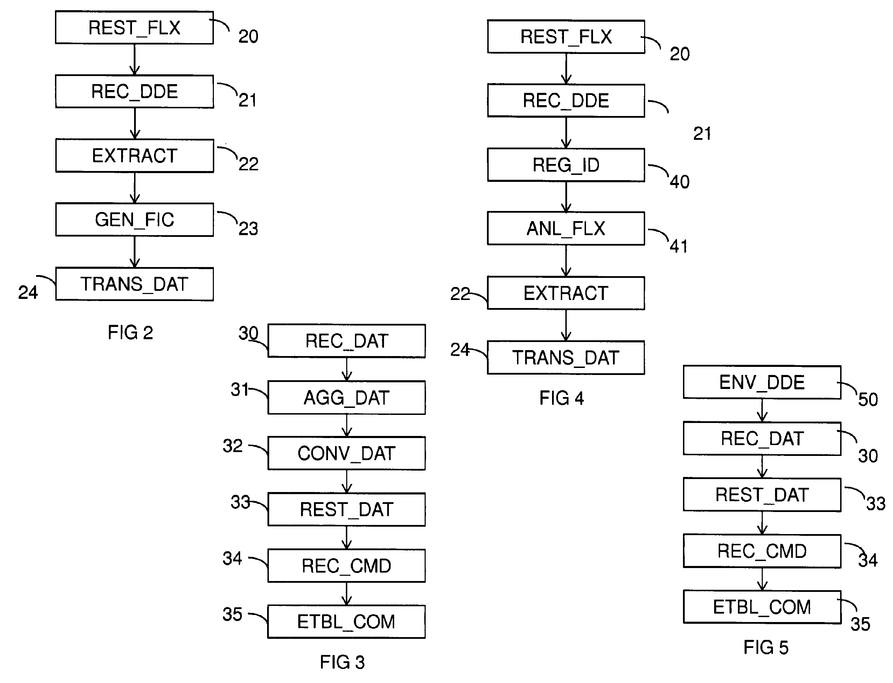

La figure 1 montre un environnement de mise en oeuvre du procédé de mise à disposition et du procédé de réception d'une donnée de communication selon des modes particuliers de réalisation de l'invention. L'environnement comprend par exemple des terminaux T1 à T5 reliés entre eux via un ou plusieurs réseaux de télécommunications 10. Les terminaux T1 et T4 sont par exemple des terminaux téléphoniques mobiles ou fixes connectés à un réseau de télécommunications mobiles, et/ou de télécommunications en circuit commuté et/ou de télécommunications IP (pour Internet Protocol). Le terminal T2 est un terminal de type ordinateur personnel connecté à réseau de télécommunication IP par l'intermédiaire d'une passerelle résidentielle ou d'un modem (non représenté). Le terminal T5 est une télévision connectée par exemple au réseau de communication IP par l'intermédiaire d'une passerelle résidentielle et pouvant recevoir des flux télévisuels via le réseau IP ou par ondes hertziennes. Le terminal T5 peut aussi être composé d'un écran et d'un décodeur de flux multimédia indépendants. Le terminal T3 est par exemple un serveur de données multimédia connecté au réseau IP.

Selon un mode particulier de réalisation de l'invention, un utilisateur possédant un terminal mobile T1, consulte par exemple sur le terminal T2 une page Internet affichant notamment les coordonnées téléphoniques d'un tiers à contacter. Lorsque l'utilisateur clique sur les coordonnées téléphoniques affichées sur le terminal T2, le procédé de mise à disposition d'au moins une donnée de communication est mis en oeuvre par le terminal T2 et les coordonnées téléphoniques affichées sont diffusées par le terminal T2 par exemple sous la forme d'un lien interprétable par une application du terminal T1. Le terminal T1 met alors en oeuvre le procédé de réception d'au moins une donnée de communication. La donnée de communication reçue est interprétée par exemple sur le terminal T1 par une application de type « Click to call » préalablement installée sur le terminal. En cliquant sur la coordonnée qui s'affiche sur le terminal T1, l'utilisateur peut ainsi émettre un appel par exemple vers le terminal T4 si les coordonnées téléphoniques correspondent à celles du terminal T4.

Selon un autre mode particulier de réalisation de l'invention, l'utilisateur consulte sur le terminal T5 un flux télévisuel dans lequel des coordonnées sont affichées ou énoncées par un présentateur de l'émission télévisuelle regardée. A l'aide de son terminal T1, l'utilisateur envoie au terminal T5 une demande d'obtention des coordonnées restituées sur le terminal T5. Le terminal T5 met en oeuvre le procédé de mise à disposition d'au moins une donnée de communication et envoie au terminal T1 les coordonnées restituées sur le terminal T5. Le terminal T1 met alors en oeuvre le procédé de réception d'au moins une donnée de communication. L'utilisateur peut choisir par exemple d'émettre un appel ou d'envoyer un message de type SMS à l'aide des coordonnées reçues interprétées par exemple par une application de type « Click to call ».

Selon une variante de ce mode particulier de réalisation de l'invention, au lieu des coordonnées restituées par le terminal T5, l'utilisateur peut demander à l'aide de son terminal T1 l'obtention d'informations supplémentaires sur l'émission télévisuelle qu'il consulte. Le terminal T5 met en oeuvre le procédé de mise à disposition d'au moins une donnée de communication et envoie au terminal T1 la donnée de communication sous la forme d'un lien de communication vers une page Internet contenant les informations supplémentaires demandées. Le terminal T1 met alors en oeuvre le procédé de réception d'au moins une donnée de communication. Une application de navigation Internet du terminal T1 peut par exemple interpréter le lien de communication reçu et établir une communication avec un serveur T3 de données multimédia. Les informations supplémentaires s'affichent alors sur le terminal T1.

La figure 2 illustre des étapes du procédé de mise à disposition d'au moins une donnée de communication selon un mode particulier de réalisation de l'invention.

Une étape 20 de restitution d'un flux multimédia (REST_FLX) est mise en oeuvre par exemple par le terminal T2 de la figure 1. Le flux multimédia correspond par exemple à une page Internet pouvant contenir du texte, des images, des vidéos, sons. Le flux multimédia peut par exemple aussi correspondre à un message électronique affiché à l'aide d'une application de messagerie électronique par exemple. Au moins une donnée de communication, par exemple une coordonnée téléphonique, est affichée sur la page Internet ou sur la fenêtre affichant le message électronique. La suite du procédé est décrite à l'aide d'un exemple d'application affichant la coordonnée téléphonique sur une page Internet.

Le terminal T2 reçoit (REC_DDE) une demande d'obtention de la donnée de communication affichée, en détectant lors d'une étape 21 qu'un utilisateur a cliqué à l'emplacement de la donnée de communication sur la page Internet.

Afin de détecter la coordonnée téléphonique sélectionnée par l'utilisateur, la coordonnée affichée peut être affichée sous une forme apte à être reconnue par le navigateur Internet comme une donnée de communication, par exemple à l'aide de balise dédiée du code HTML de la page Internet.

En variante, lorsque la coordonnée téléphonique n'est pas sous une forme directement reconnaissable par le navigateur Internet, une application intégrée au navigateur Internet peut détecter la coordonnée en analysant le code source de la page Internet et le contenu des balises du code source. L'application intégrée au navigateur Internet peut alors rendre les coordonnées affichées apte à être sélectionnée par l'utilisateur, par exemple en affichant une action possible lorsque l'utilisateur passe son pointeur de sélection au-dessus de la coordonnée. La sélection de la coordonnée ainsi détectée peut être faite par un simple clic de l'utilisateur sur la coordonnée ou un clic droit permet de déclencher la suite du procédé.

Le terminal T2 extrait (EXTRACT) lors d'une étape 22 la coordonnée téléphonique correspondante, par exemple en analysant le code source de la page Internet comme décrit ci-dessus.

Selon un mode particulier de réalisation de l'invention, lors d'une étape 23, le terminal T2 génère (GEN_FIC) ensuite un fichier comprenant la donnée de communication extraite. Le fichier généré est par exemple un fichier au format HTML (HyperText Markup Language) ou XML (extensible Markup Language) qui peut être interprété par une application de navigation Internet.

Lors d'une étape 24, le terminal T2 diffuse (TRANS_DAT) la donnée de communication extraite ou le fichier généré contenant la donnée de communication, aux terminaux à proximité. Par exemple, le terminal T2 utilise une connexion de type Bluetooth® ou un réseau local de type WIFI pour la diffusion.

Les terminaux à proximité du terminal T2 peuvent alors recevoir la donnée de communication ainsi diffusée, et notamment le terminal T1 de l'utilisateur.

Selon un mode particulier de réalisation de l'invention, l'utilisateur du terminal T2 peut avoir cliqué sur plusieurs coordonnées téléphoniques et souhaiter recevoir sur son terminal T1 l'ensemble des coordonnées téléphoniques sur lesquelles il a cliqué.

Le terminal T2 extrait alors toutes les données de communication correspondant aux coordonnées téléphoniques successives sur lesquelles l'utilisateur a cliqué. Lors de l'étape 23 de génération du fichier, le terminal T2 met aussi en oeuvre une étape d'agrégation des données de communication extraites. Ainsi, un seul fichier contenant plusieurs données de communication sera diffusé.

Selon un autre mode particulier de réalisation de l'invention, le terminal T2 peut également ajouter dans le fichier généré des informations relatives à au moins une donnée de communication permettant à l'utilisateur d'identifier la donnée de communication, telles que des informations issues des métadonnées de la page Internet par exemple correspondant notamment aux données de type titre de la page, ou du paragraphe.

La figure 3 illustre des étapes du procédé de réception d'au moins une donnée de communication selon un mode particulier de réalisation de l'invention. Le procédé de réception est par exemple mis en oeuvre par le terminal T1 qui se situe à proximité du terminal T2 mettant en oeuvre le procédé de mise à disposition d'une donnée de communication, par exemple tel que décrit en relation avec la figure 2.

Lors d'une étape 30, le terminal T1 reçoit (REC_DAT) une donnée de communication par exemple sous la forme d'un fichier HTML ou XML interprétable par une application de navigation Internet du terminal T1.

Selon un autre mode particulier de réalisation de l'invention, la donnée de communication peut aussi être reçue dans un autre format de données, par exemple un fichier au format texte, ou au format de type CSV (pour Comma Separated Values) ou autre. Par exemple pour un fichier au format texte, chaque ligne correspondra à une coordonnée, et des séparateurs, par exemple un double ";", séparent une rubrique coordonnées des différentes informations complémentaires, qui peuvent par exemple correspondre au nom et prénom de la personne, au titre de la page HTML concernée, un titre d'annonce par exemple. Chaque ligne du fichier se termine par le code ASCII (pour American Standard Code for Information Interchange) correspondant à un retour chariot. Selon ce mode de réalisation, le terminal T1 effectue une conversion de la donnée de communication transmise afin qu'elle soit interprétable par une application du terminal T1, par exemple une application de navigation Internet, la donnée de communication est alors convertie par exemple sous la forme d'un fichier HTML ou XML. Ainsi par exemple, le fichier texte décrit ci-dessus est converti en fichier HTML, en rajoutant les balises du code HTML permettant de définir une page HTML, telles que <html> pour encadrer le contenu. A l'intérieur de la page, un tableau peut être créé par des balises <table> et </table> de présentation du contenu avec une formulation du type suivant:

```
 <table>
    <tr>
            <td>Coordonnée1 </td>
            <td>Libelle d'information 1 </td>
            <td>Second libellé 1 </td>
    </tr>
    <tr>
            <td>Coordonnée2</td>
            <td>Libelle d'information 2 </td>
            <td>Second libellé 2</td>
    </tr>
    </table>
```

Chaque ligne est encadrée par les balises <tr> et </tr> et au niveau d'une ligne, chaque rubrique est encadrée par les balises <td> et </td>.

Les coordonnées peuvent être sélectionnées par l'utilisateur, par exemple à l'aide d'un clic sur les coordonnées affichées.

Dans cet exemple, la conversion du fichier texte en fichier HTML consiste à rajouter les balises indiquant qu'il s'agit d'un fichier HTML, puis à positionner chaque ligne du fichier texte, déterminée à partir du retour chariot du fichier texte, entre 2 balises <tr> et </tr> du tableau, tout en supprimant le code ASCII de ce retour chariot. Puis à l'intérieur d'une ligne, chaque rubrique déterminée dans le fichier texte par le séparateur précité est positionnée entre 2 balises <td> et </td> et à supprimer les caractères séparateurs de rubrique. Le fichier ainsi créée est enregistré dans un fichier à extension « .html ».

En variante, l'application du terminal T1 peut aussi être une application de téléphonie mobile ou de téléphonie sur IP. Dans ce cas, la donnée de communication est convertie sous la forme d'une donnée de contact ou de coordonnées téléphoniques directement utilisable par l'application de téléphonie.

Selon un autre mode particulier de réalisation de l'invention, le terminal T1 peut recevoir un groupe de données de communication provenant d'un même terminal ou de différents terminaux. Le terminal T1 met alors en oeuvre une étape 31 d'agrégation (AGG_DAT) de données de communication et affiche à l'utilisateur l'ensemble des données de communication reçues. Les données de communication peuvent être reçues dans un fichier interprétable par une application de navigation Internet du terminal T1.

Selon une variante, elles peuvent être reçues selon un autre format et nécessiter une étape 32 de conversion (CONV_DAT) de données. L'étape de conversion permet d'obtenir un fichier de données interprétable par exemple par une application de navigation Internet. Selon cette variante, les données de communication reçues sont converties par exemple sous la forme de liens insérés dans un fichier HTML ou XML affiché par l'application de navigation Internet.

Lors d'une étape 33, la donnée ou les données de communication sont restituées visuellement ou vocalement à l'utilisateur sur le terminal T1.

Selon un mode particulier de réalisation de l'invention, le terminal T1 peut effectuer une analyse de sécurité des données de communication reçues afin d'identifier si les données de communication reçues ne contiennent pas de données malsaines pour le fonctionnement du terminal T1, par exemple des données de type virus informatiques.

Selon un autre mode particulier de réalisation de l'invention, la réception de données de communication par le terminal T1 peut être associée à une sonnerie ou une vibration mise en oeuvre par le terminal T1 afin d'informer l'utilisateur de la réception de la donnée.

L'utilisateur peut alors envoyer une commande de validation (REC_CMD) au terminal T1 permettant de valider au moins une donnée de communication reçue et de permettre son enregistrement au moins temporaire dans la mémoire du terminal T1. La donnée de communication validée peut alors être utilisée afin d'établir (ETBL_COM) une communication multimédia, par exemple un appel téléphonique ou un envoi de message, vers le terminal correspondant à la coordonnée associée à la donnée de communication.

Si l'utilisateur souhaite un appel immédiat du correspondant, l'établissement de l'appel peut être mis en oeuvre lors de l'étape 35 par exemple par une application de type « Click to call » installée sur le terminal T1.

L'utilisateur peut également conserver dans la mémoire de son terminal T1 la donnée de communication afin d'établir une communication ultérieurement à l'aide d'une application de téléphonie mobile ou IP ou de messagerie.

La figure 4 illustre des étapes du procédé de mise à disposition d'au moins une donnée de communication selon un autre mode particulier de réalisation de l'invention.

Une étape 20 de restitution d'un flux multimédia (REST_FLX) est mise en oeuvre par exemple par le terminal T5 de la figure 1. Le flux multimédia correspond par exemple à un programme télévisuel dans lequel une donnée de communication est restituée sur le terminal T5. Cette donnée de communication peut par exemple correspondre à un numéro de téléphone, éventuellement associé à un ou plusieurs codes SMS (pour Short Message Service), qui apparaît à l'image ou qui est énoncé par un présentateur du programme. Le numéro de téléphone permet par exemple à un utilisateur de participer à un jeu, d'obtenir des informations supplémentaires relatives au programme restitué, ou de commander des produits présentés au cours du programme. La donnée de communication peut aussi correspondre à un lien de communication, par exemple un lien Internet permettant d'obtenir des informations supplémentaires relatives au programme restitué. Lors d'une étape 21, le terminal T5 reçoit (REC_DDE) une demande d'obtention de la donnée de communication restituée, par exemple en provenance du terminal T1 de l'utilisateur.

Selon un mode particulier de réalisation de l'invention, le type de la donnée de communication demandée, par exemple lien de communication ou coordonnées téléphoniques, peut être associé à la demande de donnée de communication et extrait de la demande.

Selon un mode particulier de réalisation de l'invention, lors d'une étape 40, le terminal T5 extrait de la demande d'obtention de la donnée de communication un identifiant du terminal T1 et enregistre temporairement (REG_ID) cet identifiant en mémoire.

Selon un autre mode particulier de réalisation de l'invention, le terminal T5 reçoit la demande d'obtention d'une donnée de communication en provenance d'une télécommande qui permet d'interagir avec le terminal T5. La télécommande permet à un utilisateur d'indiquer au terminal T5 un souhait d'émettre une communication ou de recevoir plus d'informations sur un terminal. Par exemple des touches différentes, ou des combinaisons de touches différentes peuvent être utilisées sur la télécommande pour indiquer le souhait de l'utilisateur.

Le terminal T5 n'ayant pas reçu d'identifiant de terminal associé à la demande, la demande d'obtention et la donnée de communication qui sera extraite lors de la suite du procédé peuvent être stockées temporairement dans l'attente d'une demande de validation du terminal.

En variante de ce mode particulier de réalisation, la demande d'obtention d'une donnée de communication peut provenir d'une commande vocale émise par l'utilisateur à destination du terminal T5 ou via la télécommande du terminal T5.

Selon un mode particulier de réalisation de l'invention, le terminal T5 peut recevoir plusieurs demandes d'obtention de données de communication en provenance d'un même terminal ou de différents terminaux. Les demandes reçues sont alors stockées temporairement dans la mémoire du terminal T5 et traitées successivement. Selon un autre mode particulier de réalisation de l'invention, la recherche de la donnée de communication pourra être mutualisée, par exemple si les demandes d'obtention sont reçues dans un intervalle de temps court, de l'ordre de quelques secondes par exemple. Si les demandes proviennent d'un même terminal, le terminal T5 peut y répondre par l'envoi ultérieur simultané ou successif des données de communication.

Selon un autre mode particulier de réalisation de l'invention, le terminal T5 met ensuite en oeuvre une étape 41 d'analyse du flux multimédia restitué (ANL_FLX) afin d'extraire la donnée de communication du flux multimédia. Par exemple, l'analyse peut consister en une analyse de type OCR (Optical Character Récognition). Cette analyse est mise en oeuvre sur les images du flux multimédia afin d'identifier une donnée de communication affichée. L'analyse OCR est classiquement connue dans l'état de l'art, par exemple dans « Videotext OCR using hidden Markov models », de Natarajan P, Elmieh B, Schwartz B, et Makhoul J., publié dans Proceedings of 6th International Conference on Document Analysis and Recognition, 2001*.* D'autres techniques connues d'OCR peuvent être utilisées pour mettre en oeuvre cette analyse.

L'analyse peut aussi consister en une analyse des données audio du flux multimédia, par exemple par une reconnaissance vocale, afin d'identifier une donnée de communication lue. L'analyse peut aussi consister en une combinaison de ces deux types d'analyse sur les données audio et vidéo. Selon une variante de ce mode particulier de réalisation de l'invention, plusieurs données de communication peuvent être extraites, par exemple pour tenir compte du temps de réaction d'un utilisateur suite à la diffusion d'une coordonnée au cours d'un programme diffusé.

Selon un autre mode particulier de réalisation de l'invention, l'étape d'analyse du flux multimédia peut être mise en oeuvre de manière continue sur le flux multimédia afin d'extraire en permanence des données de communication restituées par un programme quelconque. Les données de communication sont ensuite enregistrées et horodatées temporairement en mémoire sur le terminal T5 afin d'être éventuellement utilisées lors de la réception d'une demande d'obtention d'une donnée de communication.

Selon un autre mode particulier de réalisation de l'invention, l'étape d'analyse peut être mise en oeuvre par un serveur distant sur le flux multimédia. Selon le choix de mise en oeuvre de ce mode particulier de réalisation de l'invention, l'analyse peut être mise en oeuvre de manière continue ou à la demande. Ce mode de réalisation permet de mutualiser l'analyse de flux multimédia entre plusieurs utilisateurs. Dans ce mode particulier de réalisation de l'invention, le terminal T5 envoie au serveur distant une commande d'analyse du flux multimédia ainsi qu'une information sur l'intervalle de temps sur lequel l'analyse doit être mise en oeuvre. Le serveur distant lui renvoie en retour au moins une donnée de communication identifiée dans le flux multimédia.

Selon un autre mode particulier de réalisation de l'invention, la donnée de communication peut être envoyée simultanément avec le flux multimédia comme une donnée complémentaire associée au flux.

Le terminal T5 extrait (EXTRACT) lors d'une étape 22 la donnée de communication des données analysées à partir du flux multimédia, ou suite à la réception de la donnée de communication en provenance d'un serveur distant ou du flux multimédia lorsque la donnée est envoyée simultanément au flux.

Selon un mode particulier de réalisation de l'invention, le terminal T5 peut générer un fichier similairement à l'étape (GEN_FIC) décrite en relation avec la figure 2.

Lors d'une étape 24, le terminal T5 transmet (TRANS_DAT) la donnée de communication extraite au terminal T1 grâce à l'identifiant du terminal préalablement enregistré. Par exemple, le terminal T5 utilise une connexion de type Bluetooth® ou un réseau local de type WIFI pour la transmission. Selon un mode particulier de réalisation de l'invention, avant d'effectuer la transmission de la donnée de communication extraite, le terminal T5 peut attendre la réception d'une demande de validation d'un terminal, par exemple le terminal T1. Le terminal T5 stocke temporairement la donnée de communication extraite en mémoire. A la réception de la demande de validation par le terminal T1 par exemple, le terminal T5 extrait de la demande de validation l'identifiant du terminal T1 et lui transmet la donnée de communication stockée. Ce mode de réalisation est particulièrement avantageux lorsque l'utilisateur souhaite interagir sur un flux multimédia restitué par le terminal T5 mais qu'il n'a pas de terminal T1 à proximité. Souvent, une télécommande est à proximité du terminal T5 de restitution et il est donc plus rapide pour l'utilisateur d'interagir par rapport à un instant du flux multimédia à l'aide de la télécommande.

Lorsque l'utilisateur est disponible pour déclencher une communication, il peut utiliser le terminal T1 afin de valider la demande de donnée de communication au terminal T5 et la recevoir sur son terminal T1.

Selon un mode particulier de réalisation de l'invention, Le terminal T5 peut avoir extrait plusieurs données de communication du flux multimédia. Dans ce cas, le terminal T5 envoie les données de communication extraites au terminal T1. Selon un mode particulier de réalisation de l'invention, le terminal T5 agrège les données de communication dans un fichier avant la transmission au terminal T1.

Selon une variante, le terminal T5 peut également ajouter dans le fichier généré des informations relatives à au moins une donnée de communication permettant à l'utilisateur d'identifier la donnée de communication.

Selon un autre mode particulier de réalisation, le procédé décrit à la figure 4 peut aussi être appliqué au cas où la donnée de communication est affichée (REST_FLX) sur le terminal de type ordinateur personnel T2. Le terminal T2 reçoit (REC_DDE) une demande d'obtention d'une donnée de communication de la part du terminal T1. Dans ce mode de réalisation, une application logicielle qui pourra avoir été préalablement installée sur le terminal T2, permet de rechercher et détecter une fenêtre active du terminal T2. Une fenêtre active du terminal T2 peut correspondre par exemple à une fenêtre de navigateur Internet, ou à une fenêtre d'une application de messagerie ouverte sur le terminal T2, ou encore à un document bureautique. L'application logicielle permet également de détecter dans la fenêtre active au moins une donnée de communication affichée. Dans ce mode de réalisation, il est possible de détecter des coordonnées téléphoniques ou des liens de type hypertexte, ainsi que des informations complémentaires associées à ces données de communication et permettant de les identifier.

Suite à la réception de la demande d'obtention d'une donnée de communication, le terminal T2 extrait de la demande d'obtention un identifiant du terminal T1 et enregistre temporairement (REG_ID) cet identifiant en mémoire.

Le terminal T2 analyse le flux multimédia restitué sur le terminal T2 afin d'extraire au moins une donnée de communication. Le flux multimédia peut par exemple correspondre à une fenêtre active du terminal T2 (ANL_FLX). L'extraction des données de communication peut par exemple s'effectuer en analysant le code source d'une page Internet ou du message électronique si la fenêtre active correspond à une fenêtre d'une application de navigation Internet ou à une fenêtre d'une application de messagerie électronique. Si la fenêtre active correspond à une application bureautique, le terminal T2 peut analyser le contenu du document affiché dans la fenêtre active. Le terminal T2 extrait (EXTRACT) au moins une donnée de communication des données analysées à partir du flux multimédia et génère un fichier similairement à l'étape (GEN_FIC) décrite en relation avec la figure 2. Dans ce mode de réalisation, l'utilisateur n'ayant pas sélectionné au préalable sur l'écran du terminal T2 une donnée de communication particulière, il est probable que le terminal T2 extrait plus d'une donnée de communication restituée par le flux multimédia. Dans cette variante, le terminal T2 pourra agréger les données de communication extraites dans un même fichier.

Le terminal T2 transmet (TRANS_DAT) la donnée de communication extraite au terminal T1 grâce à l'identifiant du terminal préalablement enregistré. Par exemple, le terminal T2 utilise une connexion de type Bluetooth® ou un réseau local de type WIFI pour la transmission. La figure 5 illustre des étapes du procédé de réception d'au moins une donnée de communication selon un autre mode particulier de réalisation de l'invention. Le procédé de réception est par exemple mis en oeuvre par le terminal T1 qui se situe à proximité du terminal T5 mettant en oeuvre le procédé de mise à disposition d'une donnée de communication, par exemple tel que décrit en relation avec la figure 4.

Lors de la consultation d'un flux multimédia sur le terminal T5, le terminal T1 émet lors d'une étape 50 une demande d'obtention (ENV_DDE) d'une donnée de communication restituée sur le terminal T5. Selon un mode particulier de réalisation de l'invention, une application dédiée est installée sur le terminal T1 permettant au terminal d'interagir avec le terminal T5.

Lors d'une étape 30, le terminal T1 en retour reçoit (REC_DAT) la donnée de communication par exemple sous la forme d'un fichier HTML ou XML interprétable par une application de navigation Internet du terminal T1 ou selon un autre format interprétable par une application de téléphonie par exemple.

Selon un mode particulier de réalisation de l'invention, le terminal T1 peut recevoir plusieurs données de communication soit successivement, soit agrégées dans un même fichier de donnée. Lors d'une étape 33, la donnée ou les données de communication sont restituées visuellement ou vocalement à l'utilisateur sur le terminal T1.

L'utilisateur peut alors envoyer une commande de validation (REC_CMD) au terminal T1 permettant de valider au moins une donnée de communication reçue et de permettre son enregistrement au moins temporaire dans la mémoire du terminal T1. La donnée de communication validée peut alors être utilisée afin d'établir (ETBL_COM) une communication multimédia, par exemple un appel téléphonique ou un envoi de message, vers le terminal correspondant à la coordonnée associée à la donnée de communication.

Si l'utilisateur souhaite un appel immédiat du correspondant, l'établissement de l'appel peut être mis en oeuvre lors de l'étape 35 par exemple par une application de type « Click to call » installée sur le terminal T1.

L'utilisateur peut également conserver dans la mémoire de son terminal T1 la donnée de communication afin d'établir une communication ultérieurement à l'aide d'une application de téléphonie mobile ou IP ou de messagerie.

Selon un autre mode particulier de réalisation de l'invention, lorsque la donnée de communication correspond à un lien de communication permettant d'obtenir des informations supplémentaires relatives au programme restitué, le terminal T1 établit (ETBL_COM) une communication avec un serveur distant de données multimédia à l'aide du lien de communication. Le lien de communication contient une donnée d'adressage permettant d'adresser le serveur distant. Le serveur distant envoie ensuite au terminal T1 des informations relatives au programme restitué.

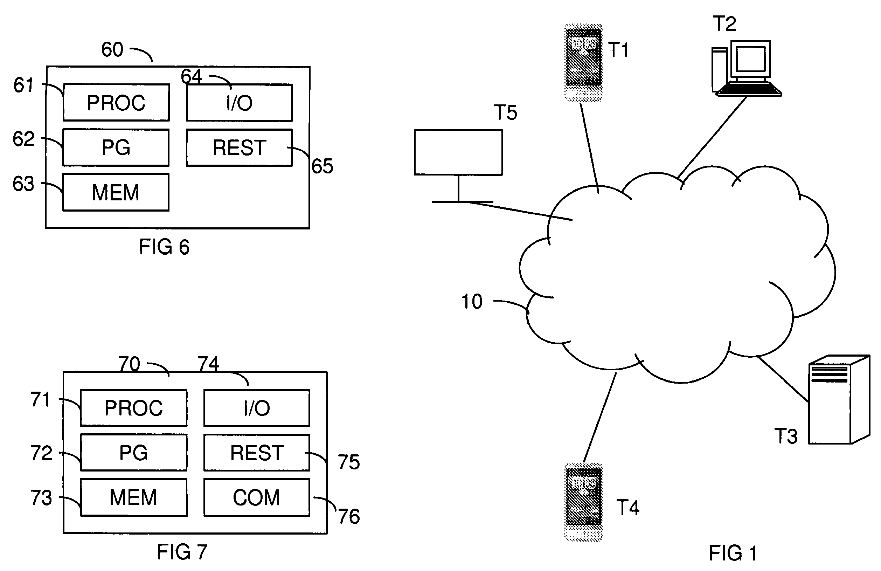

La figure 6 illustre un dispositif 60 permettant de mettre en oeuvre le procédé de mise à disposition d'au moins une donnée de communication selon un mode particulier de réalisation de l'invention. Le dispositif correspond par exemple à un terminal, de type TV ou ordinateur personnel.

Le dispositif comprend un espace de stockage 63, par exemple une mémoire (MEM), une unité de traitement 61, équipée par exemple d'un microprocesseur (PROC), et pilotée par le programme d'ordinateur (PG) 62, mettant en oeuvre le procédé de mise à disposition d'au moins une donnée de communication tel que décrit dans l'invention en référence aux figures 2 ou 4.

A l'initialisation, les instructions de code du programme d'ordinateur 62 sont par exemple chargées dans une mémoire RAM avant d'être exécutées par le processeur de l'unité de traitement 61. Le microprocesseur de l'unité de traitement 61 met en oeuvre les étapes du procédé de mise à disposition d'au moins une donnée de communication restituée lors de la consultation d'un flux multimédia sur le dispositif, et notamment les étapes de réception d'une demande d'obtention de la au moins une donnée de communication, d'extraction de la au moins une donnée de communication à partir du flux multimédia, de transmission à au moins un terminal de la au moins une donnée de communication extraite, la au moins une donnée de communication transmise permettant de mettre en oeuvre sur le terminal une application permettant d'établir une communication multimédia entre le terminal et un dispositif distant, selon les instructions du programme d'ordinateur 62.

Pour cela, le dispositif 60 comprend des moyens 65 de restitution (REST) de flux multimédia, par exemple un écran et des haut-parleurs.

Le dispositif 60 comprend également des moyens 64 de réception et de transmission (I/O) de données, tels qu'une interface de connexion réseau, par exemple de type Bluetooth®, WIFI, infrarouge, IP.

Un module d'extraction de la au moins une donnée de communication à partir du flux multimédia est piloté par un programme d'ordinateur PG mis en oeuvre par un processeur PROC utilisant une mémoire MEM.

Selon un mode particulier de réalisation de l'invention, le dispositif comprend des moyens d'enregistrement (MEM) au moins temporaire d'un identifiant d'un terminal envoyant une demande d'obtention d'une donnée de communication. Les moyens d'enregistrement permettent aussi, selon un autre mode particulier de réalisation de l'invention, de stocker des données de communication reçues simultanément au flux multimédia.

La figure 7 illustre un dispositif 70 permettant de mettre en oeuvre le procédé de réception d'au moins une donnée de communication selon un mode particulier de réalisation de l'invention.

Le dispositif correspond par exemple à un terminal, de type téléphone mobile, fixe, smartphone (téléphone intelligent), tablette.

Le dispositif comprend un espace de stockage 73, par exemple une mémoire (MEM), une unité de traitement 71, équipée par exemple d'un microprocesseur (PROC), et pilotée par le programme d'ordinateur (PG) 72, mettant en oeuvre le procédé de réception d'au moins une donnée de communication tel que décrit dans l'invention en référence aux figures 3 ou 5.

A l'initialisation, les instructions de code du programme d'ordinateur 72 sont par exemple chargées dans une mémoire RAM avant d'être exécutées par le processeur de l'unité de traitement 71. Le microprocesseur de l'unité de traitement 71 met en oeuvre les étapes du procédé de réception d'au moins une donnée de communication restituée lors de la consultation d'un flux multimédia sur un terminal, et notamment les étapes de réception de la au moins une donnée de communication, de réception d'une commande de validation par un utilisateur, suite à la restitution par le dispositif de la au moins une donnée de communication reçue, de mise en oeuvre d'une application permettant d'établir une communication multimédia entre le dispositif et un dispositif distant, à partir de la au moins une donnée de communication sous la forme d'un lien interprétable par l'application du dispositif, selon les instructions du programme d'ordinateur 72.

Pour cela, le dispositif 70 comprend des moyens 74 de réception et de transmission (I/O) de données, tels qu'une interface de connexion réseau, par exemple de type Bluetooth®, WIFI, infrarouge, IP.

Selon un mode particulier de réalisation de l'invention, les moyens de réception et de transmission permettent au dispositif d'émettre une demande d'obtention d'une donnée de communication.

Les moyens de réception et de transmission permettent aussi au dispositif de recevoir une donnée de communication transmise.

Le dispositif 70 comprend également des moyens 75 de restitution (REST) de données de communication, par exemple un écran et des haut-parleurs. Une application du dispositif 70 capable d'interpréter la donnée de communication reçue par le dispositif est pilotée par un programme d'ordinateur PG mis en oeuvre par un processeur PROC utilisant une mémoire MEM. Selon un mode particulier de réalisation de l'invention, cette application peut correspondre à une application de navigation Internet.

Selon un autre mode particulier de réalisation de l'invention, cette application peut correspondre une application de téléphonie ou de messagerie.

Selon un mode particulier de réalisation de l'invention, le dispositif comprend des moyens d'enregistrement (MEM) au moins temporaire d'une donnée de communication reçue.

Le dispositif comprend aussi des moyens 76 de communication (COM) permettant d'établir une communication multimédia entre le dispositif et un dispositif distant, par exemple un terminal téléphonique ou un serveur. Les moyens de communication peuvent par exemple correspondre à une interface réseau permettant d'établir une communication sur un réseau mobile, ou un réseau circuit commuté ou un réseau IP.

## Revendications

1. Procédé de mise à disposition d'au moins une donnée de communication restituée lors de la consultation (20) d'un flux multimédia sur un premier terminal comprenant :
- une étape de reception (21) d'une demande d'obtention de la au moins une donnée de communication,
- une étape d'extraction (22) de la au moins une donnée de communication à partir du flux multimédia,
le procédé est **caractérisé en ce qu'**il comprend :
- une étape de stockage de la donnée de communication extraite,
- une étape de réception d'une demande de validation de la demande de donnée de communication en provenance d'un second terminal,
- une étape d'extraction d'un identifiant du second terminal de la demande de validation reçue,
- une étape de transmission (24) au second terminal de la au moins une donnée de communication extraite, la au moins une donnée de communication transmise permettant de mettre en oeuvre sur le second terminal une application permettant d'établir une communication multimédia entre le second terminal et un dispositif distant.

2. Procédé de mise à disposition selon la revendication 1 **caractérisé en ce que** qu'il comprend en outre une étape de conversion (23) de la au moins une donnée de communication extraite, sous la forme d'un lien interprétable par l'application du second terminal.

3. Procédé de mise à disposition selon la revendication 1 **caractérisé en ce que** la demande d'obtention de la au moins une donnée de communication est émise par une télécommande adaptée pour interagir avec le premier terminal.

4. Procédé de mise à disposition selon la revendication 1 **caractérisé en ce que** l'étape d'extraction de la au moins une donnée de communication comprend une sous-étape d'analyse (41) des données audio et/ou vidéo du flux multimédia consulté.

5. Procédé de réception mis en oeuvre par un second terminal, d'au moins une donnée de communication restituée lors de la consultation d'un flux multimédia sur un premier terminal **caractérisé en ce qu'**il comprend :
- une étape de validation d'une demande de donnée de communication envoyée au premier terminal,
- une étape de réception (30) de la au moins une donnée de communication,
- une étape de réception (34) d'une commande de validation par un utilisateur, suite à la restitution par le second terminal de la au moins une donnée de communication reçue,
- une étape de mise en oeuvre (35) d'une application permettant d'établir une communication multimédia entre le second terminal et un dispositif distant, à partir de la au moins une donnée de communication sous la forme d'un lien interprétable par l'application du second terminal.

6. Procédé de réception selon la revendication 5 caractérisé en qu'il comprend, préalablement à l'étape de mise en oeuvre de l'application, une étape de conversion (32) de la au moins une donnée de communication reçue sous la forme d'un lien interprétable par l'application du second terminal.

7. Procédé de réception selon la revendication 5 caractérisé en que la au moins une donnée de communication est associée à des informations complémentaires permettant à l'utilisateur d'identifier la au moins une donnée de communication.

8. Procédé de réception selon la revendication 5 caractérisé en que la au moins une donnée de communication est stockée dans une mémoire du second terminal.

9. Terminal de mise à disposition d'au moins une donnée de communication restituée lors de la consultation d'un flux multimédia sur le terminal de mise à disposition comprenant :
- des moyens de réception d'une demande d'obtention de la au moins une donnée de communication,
- des moyens d'extraction de la au moins une donnée de communication à partir du flux multimédia,
le dispositif est **caractérisé en ce qu'**il comprend :
- des moyens de stockage de la donnée de communication extraite,
- des moyens de réception d'une demande de validation de la demande de donnée de communication en provenance d'un second terminal,
- des moyens d'extraction d'un identifiant du second terminal de la demande de validation reçue,
- des moyens de transmission au second terminal de la au moins une donnée de communication extraite, la au moins une donnée de communication transmise permettant de mettre en oeuvre sur le second terminal une application permettant d'établir une communication multimédia entre le second terminal et un dispositif distant.

10. Terminal de réception d'au moins une donnée de communication restituée lors de la consultation d'un flux multimédia sur un terminal de restitution **caractérisé en ce qu'**il comprend:
- des moyens de validation d'une demande de donnée de communication envoyée au terminal de restitution,
- des moyens de réception de la au moins une donnée de communication,
- des moyens de réception d'une commande de validation par un utilisateur, suite à la restitution par le terminal de réception de la au moins une donnée de communication reçue,
- des moyens de mise en oeuvre d'une application permettant d'établir une communication multimédia entre le terminal de réception et un dispositif distant, à partir de la au moins une donnée de communication sous la forme d'un lien interprétable par l'application du terminal de réception.

11. Programme d'ordinateur comportant des instructions pour l'exécution du procédé de mise à disposition selon l'une quelconque des revendications 1 à 4, ou du procédé de réception selon l'une quelconque des revendications 5 à 10 lorsque le programme est exécuté par un processeur.

## Patentansprüche

1. Verfahren zur Bereitstellung mindestens eines Kommunikationsdatums, das bei der Konsultation (20) eines Multimediastroms auf einem ersten Terminal wiedergegeben wird, umfassend:
- einen Schritt des Empfangs (21) eines Antrags auf Erhalt des mindestens einen Kommunikationsdatums,
- einen Schritt der Entnahme (22) des mindestens einen Kommunikationsdatums aus dem Multimediastrom,
wobei das Verfahren **dadurch gekennzeichnet ist, dass** es umfasst:
- einen Schritt des Speicherns des entnommenen Kommunikationsdatums,
- einen Schritt des Empfangs eines Antrags auf Validierung des Antrags auf ein Kommunikationsdatum von einem zweiten Terminal,
- einen Schritt der Entnahme eines Identifikators des zweiten Terminals aus dem empfangenen Validierungsantrag,
- einen Schritt der Übertragung (24) des mindestens einen entnommenen Kommunikationsdatums auf das zweite Terminal, wobei es das mindestens eine übertragene Kommunikationsdatum ermöglicht, auf dem zweiten Terminal eine Anwendung einzusetzen, die es ermöglicht, eine Multimediakommunikation zwischen dem zweiten Terminal und einer entfernten Vorrichtung herzustellen.

2. Bereitstellungsverfahren nach Anspruch 1, **dadurch gekennzeichnet, dass** es ferner einen Schritt (23) der Umwandlung des mindestens einen entnommenen Kommunikationsdatums in Form einer durch die Anwendung des zweiten Terminals interpretierbaren Verbindung umfasst.

3. Bereitstellungsverfahren nach Anspruch 1, **dadurch gekennzeichnet, dass** der Antrag auf Erhalt des mindestens einen Kommunikationsdatums von einer Fernsteuerung entsandt wird, die dazu vorgesehen ist, mit dem ersten Terminal zu interagieren.

4. Bereitstellungsverfahren nach Anspruch 1, **dadurch gekennzeichnet, dass** der Schritt der Entnahme des mindestens einen Kommunikationsdatums einen Unterschritt (41) der Analyse der Audio- und/oder Videodaten des konsultierten Multimediastroms umfasst.

5. Verfahren, das von einem zweiten Terminal eingesetzt wird, für den Empfang mindestens eines Kommunikationsdatums, das bei der Konsultation eines Multimediastroms auf einem ersten Terminal wiedergegeben wird, **dadurch gekennzeichnet, dass** es umfasst:
- einen Schritt der Validierung eines Antrags auf ein Kommunikationsdatum, der an das erste Terminal gesandt wird,
- einen Schritt (30) des Empfangs des mindestens einen Kommunikationsdatums,
- einen Schritt des Empfangs (34) eines Validierungsantrags durch einen Benutzer nach der Wiedergabe des mindestens einen empfangenen Kommunikationsdatums durch das zweite Terminal,
- einen Schritt des Einsatzes (35) einer Anwendung, die es ermöglicht, eine Multimediakommunikation zwischen dem zweiten Terminal und einer entfernten Vorrichtung ausgehend von dem mindestens einen Kommunikationsdatum, das in Form einer durch die Anwendung des zweiten Terminals interpretierbaren Verbindung empfangen wird, herzustellen.

6. Empfangsverfahren nach Anspruch 5, **dadurch gekennzeichnet, dass** es vor dem Schritt des Einsatzes der Anwendung einen Schritt (32) der Umwandlung des mindestens einen empfangenen Kommunikationsdatums in Form einer interpretierbaren Verbindung durch die Anwendung des zweiten Terminals umfasst.

7. Empfangsverfahren nach Anspruch 5, **dadurch gekennzeichnet, dass** das mindestens eine Kommunikationsdatum komplementären Informationen zugeordnet ist, die es dem Benutzer ermöglichen, das mindestens eine Kommunikationsdatum zu identifizieren.

8. Empfangsverfahren nach Anspruch 5, **dadurch gekennzeichnet, dass** das mindestens eine Kommunikationsdatum in einem Speicher des zweiten Terminals gespeichert ist.

9. Terminal zur Bereitstellung mindestens eines Kommunikationsdatums, das bei der Konsultation eines Multimediastroms auf dem Bereitstellungsterminal wiedergegeben wird, umfassend:
- Mittel für den Empfang eines Antrags auf Erhalt des mindestens einen Kommunikationsdatums,
- Mittel zur Entnahme des mindestens einen Kommunikationsdatums aus dem Multimediastrom,
wobei die Vorrichtung **dadurch gekennzeichnet ist, dass** sie umfasst:
- Mittel zum Speichern des entnommenen Kommunikationsdatums,
- Mittel für den Empfang eines Antrags auf Validierung des Antrags auf ein Kommunikationsdatum von einem zweiten Terminal,
- Mittel zur Entnahme eines Identifikators des zweiten Terminals aus dem empfangenen Validierungsantrag,
- Mittel zur Übertragung des mindestens einen entnommenen Kommunikationsdatums auf das zweite Terminal, wobei es das mindestens eine übertragene Kommunikationsdatum ermöglicht, auf dem zweiten Terminal eine Anwendung einzusetzen, die es ermöglicht, eine Multimediakommunikation zwischen dem zweiten Terminal und einer entfernten Vorrichtung herzustellen.

10. Terminal für den Empfang mindestens eines Kommunikationsdatums, das bei der Konsultation eines Multimediastroms auf einem Wiedergabeterminal wiedergegeben wird, **dadurch gekennzeichnet, dass** es umfasst:
- Mittel zur Validierung eines Antrags auf ein Kommunikationsdatum, der an das erste Terminal gesandt wird,
- Mittel für den Empfang des mindestens einen Kommunikationsdatums,
- Mittel für den Empfang eines Validierungsantrags durch einen Benutzer nach der Wiedergabe des mindestens einen empfangenen Kommunikationsdatums durch das zweite Terminal,
- Mittel für den Einsatz einer Anwendung, die es ermöglicht, eine Multimediakommunikation zwischen dem zweiten Terminal und einer entfernten Vorrichtung ausgehend von dem mindestens einen Kommunikationsdatum in Form einer durch die Anwendung des zweiten Terminals interpretierbaren Verbindung herzustellen.

11. Computerprogramm, umfassend Instruktionen für die Ausführung des Bereitstellungsverfahrens nach einem der Ansprüche 1 bis 4 oder des Empfangsverfahrens nach einem der Ansprüche 5 bis 10, wenn das Programm von einem Prozessor ausgeführt wird.

## Claims

1. Method for making available at least one communication datum retrieved during the consultation (20) of a multimedia stream on a first terminal, comprising:
- a step (21) of receiving a request to obtain the at least one communication datum,
- a step (22) of extracting the at least one communication datum from the multimedia stream,
the method is **characterized in that** it comprises:
- a step of storing the extracted communication datum,
- a step of receiving a request for validation of the request for a communication datum originating from a second terminal,
- a step of extracting an identifier of the second terminal from the validation request received,
- a step (24) of transmitting the at least one extracted communication datum to the second terminal, the at least one transmitted communication datum making it possible to implement on the second terminal an application making it possible to set up a multimedia communication between the second terminal and a remote device.

2. Method for making available according to Claim 1, **characterized in that** it furthermore comprises a step (23) of converting the at least one extracted communication datum into the form of a link that can be interpreted by the application of the second terminal.

3. Method for making available according to Claim 1, **characterized in that** the request to obtain the at least one communication datum is made by a remote control suitable for interacting with the first terminal.

4. Method for making available according to Claim 1, **characterized in that** the step of extracting the at least one communication datum comprises a sub-step (41) of analyzing the audio and/or video data of the consulted multimedia stream.

5. Method, implemented by a second terminal, for receiving at least one communication datum retrieved during the consultation of a multimedia stream on a first terminal **characterized in that** it comprises:
- a step of validating a request for a communication datum sent to the first terminal,
- a step (30) of receiving the at least one communication datum,
- a step (34) of receiving a user validation command, following the retrieving, by the second terminal, of the at least one received communication datum,
- a step (35) of implementing an application making it possible to set up a multimedia communication between the second terminal and a remote device, from the at least one communication datum in the form of a link that can be interpreted by the application of the second terminal.

6. Receiving method according to Claim 5, **characterized in that** it comprises, prior to the step of implementing the application, a step (32) of converting the at least one received communication datum into the form of a link that can be interpreted by the application of the second terminal.

7. Receiving method according to Claim 5, **characterized in that** the at least one communication datum is associated with additional information allowing the user to identify the at least one communication datum.

8. Receiving method according to Claim 5, **characterized in that** the at least one communication datum is stored in a memory of the second terminal.

9. Terminal for making available at least one communication datum retrieved during the consultation of a multimedia stream on the terminal for making available, comprising :
- means for receiving a request to obtain the at least one communication datum,
- means for extracting the at least one communication datum from the multimedia stream,
- the device is **characterized in that** it comprises:
- means for storing the extracted communication datum,
- means for receiving a request for validation of the request for a communication datum originating from a second terminal,
- means for extracting an identifier of the second terminal of the received validation request,
means for transmitting the at least one extracted communication datum to the second terminal, the at least one transmitted communication datum making it possible to implement on the second terminal an application making it possible to set up a multimedia communication between the second terminal and a remote device.

10. Terminal for receiving at least one communication datum retrieved during the consultation of a multimedia stream on a retrieving terminal **characterized in that** it comprises:
- means for validating a request for a communication datum sent to the retrieving terminal,
- means for receiving the at least one communication datum,
- means for receiving a user validation command, following the retrieval by the receiving terminal of the at least one received communication datum,
- means for implementing an application making it possible to set up a multimedia communication between the second terminal and a remote device, from the at least one communication datum in the form of a link that can be interpreted by the application of the receiving terminal.

11. Computer program including instructions for executing the method for making available according to any one of Claims 1 to 4, or of the receiving method according to any one of Claims 5 to 10, when the program is executed by a processor.
